Europäisches Patentamt

European Patent Office

Office européen des brevets

(19)

(11) EP 1 191 786 A1

(12) **EUROPEAN PATENT APPLICATION**

(43) Date of publication:
27.03.2002 Bulletin 2002/13

(51) Int Cl.7: **H04N 5/44**

(21) Application number: 00120657.2

(22) Date of filing: 21.09.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **Sony International (Europe) GmbH
10785 Berlin (DE)**

(72) Inventors:
• **Sartor, Piergiorgio,
c/oAdv.Techn.Center Stuttgart
70327 Stuttgart (DE)**

• **Lubbers, Jos,
c/o Advanced Techn. Center Stuttgart
70327 Stuttgart (DE)**
• **Wagner, Peter,
c/oAdvanced Techn. Center Stuttgart
70327 Stuttgart (DE)**
• **Schwendowius, Jörg,
c/o Adv.Techn.Center Stuttgart
70327 Stuttgart (DE)**

(74) Representative: **Müller . Hoffmann & Partner
Patentanwälte
Innere Wiener Strasse 17
81667 München (DE)**

(54) **Interlace to progressive conversion**

(57) Interlace to progressive conversion methods are used to interpolate the missing lines in an interlaced video signal. The method provided by the present invention selects one of different filter algorithms according to a result of a motion detection process of the interlaced video signal, wherein the different filter algorithms differ from each other in a ratio of spatial and temporal filtering. An advantage is a high quality of the resulting signal in the progressive mode regardless of whether the interlaced video signal shows motion or not.

Fig. 1

EP 1 191 786 A1

**Description**

The invention relates to a method of performing interlace to progressive conversion of video signal source fields on a pixel by pixel basis.

Interlace to progressive conversion (IPC or I2P) of video signal source fields is known in the art. It refers to the problem of interpolating the missing lines in interlaced video signal source fields by use of signal filtering algorithms like signal interpolation algorithms to generate a progressive signal containing the missing lines.

A lot of different kinds of IPC-methods are known. For example, EP 0 622 953 B1 discloses a motion adaptive video processing system which uses a motion dependent signal to determine a suitable IPC-method. EP 0 946 054 A1 discloses a weighted median filter which is switchable within different IPC-methods by selection of weights of the filter. US 5,329,314 describes a double median interpolation method. EP 0 567 319 B1 discloses a scanning line converting method which sets a center value for a two-dimensional pseudomedian filtering in accordance with the movement in the input video signal. US 5,793,435 discloses a non-seperable spatio-temporal filter. EP 0 600 291 A1 describes an IPC-method depending on an error estimation. Further, in a publication in IEEE Transactions on Consumer Electronics, Vol. 37, No. 3, August 1991 by Y. Nuevo, a motion insensitive method for scan rate conversion is described, which assigns weights to input values of the interpolating scheme.

It is an object of the present invention to provide a further IPC-method which shows good progressive signals.

To solve this object, the present invention provides a method of performing interlace to progressive conversion of video signal source fields on a pixel by pixel basis, which is characterized by selecting one of different filter algorithms according to a result of a motion detection process of said video signal source fields, wherein said different filter algorithms differ from each other in a ratio of spatial to temporal filtering.

Further preferred embodiments of this method according to the present invention defined in independent claim 1, are described in the subclaims.

An important aspect of the present invention is that different filter algorithms are used to generate a progressive signal from interlaced video signal source fields, wherein a selecting process of the different filter algorithms is done according to a result of a motion detection process of the video signal source fields.

The motion detection process is preferably realized by substracting pixel values of at least one pixel of a first video signal source field (in the following referred to as source field) from pixel values of at least one pixel of a second source field, which is temporarily different to the first source field. The pixel substracting process can be done at each stage of granularity. For example, it can be done on a pixel basis (fine granularity) as well as on an image block basis (large granularity), a line or a sub-line basis (medium granularity). This kind of motion detection process has the advantage that it is possible to focus on partial areas of the source fields, which makes it possible to selectively monitoring respective motion of predetermined areas of the source fields. It is therefore not necessary to monitor the whole source fields if it is known that the motion is restricted to certain areas thereof.

In the pixel value substracting process, preferably pixel values of pixels which belong to temporarily different source fields, but which have the same spatial positions in the respective source field, are substracted from each other. For example, a first line of a first source field that is temporarily immediately preceding that source field containing the pixels to be interpolated, and a second line of a second source field that is temporarily immediately succeeding that source field containing the pixels to be interpolated, are substracted from each other, wherein the spatial position of the first line is the same as that of the second line. Another possibility is to substract pixel values of pixels which belong to temporarily immediately succeeding source fields, respectively. However, in such a case it is not possible to use pixel values having the same spatial positions.

In order to facilitate the further data processing of the IPC-process, the detected motion is preferably represented by a single scalar En, which will be referred to in the following as motion En.

To perform the respective filter algorithms of the IPC-process, preferably different rank order filters are used. A rank order filter is a filter which yields as an output value one of the input values of the rank order filter, wherein the output value is chosen according to a comparing process between the input values. The rank order filters may be supplied with different input values, respectively, preferably depending on the motion En. For example, "original" pixel values of source fields and/or interpolation values derived from the original pixel values are used as input values of the different rank order filters. This means that the motion detection process may have an influence upon both the selection process of the different filter algorithms and the respective input values. This results in a large flexibility of the IPC-process.

The rank order filters are preferably median filters or pseudo-median filters. An advantage of the median filter is its selection property. That is, the output is an input pixel, not a computed one, as e.g. for FIR filters. This results, when combining it with a pixel matching process, in a filter algorithm showing good motion adaptive filter property.

The selection process of the different filter algorithms is preferably based upon a comparison process of the detected motion En with different motion threshold values $th_1$, $th_2$, ..., $th_n$. The threshold values may be selected by a user or be calculated from the source fields.

The selection process of the input values of the respective filter algorithms is also preferably based upon the comparison process of the detected motion En with the different motion threshold values $th_1$, $th_2$, ..., $th_n$. As a result of the input value selection process, the respective relative amount of temporal input values and spatial input values is determined, wherein temporal input value means a pixel value from a source field being temporarily different to that which contains the pixels to be interpolated, and, accordingly, spatial input value denotes a pixel value from that source field which contains the pixels to be interpolated. Thus, a ratio of spatial to temporal filtering means a ratio of the amount of spatial input values to the amount of the temporal input values used by one filter algorithm.

For example, the ratio of spatial and temporal filtering is chosen such that a share of spatial filtering is higher than a share of temporal filtering if the motion detection process yields a motion En which is higher than a first predetermined threshold value. Additionally or alternatively, the ratio of spatial and temporal focus is chosen such that a share of temporal filtering is higher than a share of spatial filtering if the motion detection process yields a motion En which is lower than a second predetermined threshold value. The first threshold value and the second threshold value may be condensed into one single threshold value.

The use of different threshold values makes it also possible to achieve a high flexibility as far as scalability is concerned. This means that the complexity of a respective filter being used for a given threshold depends on the amount of computational power. The higher the computational power, the higher the complexity of the filters being used. For example, the complexity of of a filter may automatically vary corresponding to the amount of available computational power.

Further advantages and embodiments of the present invention will be explained below in conjunction with the following drawings.

Fig. 1     shows a schematic drawing of a preferred embodiment of an IPC process according to the present invention using a motion detection in conjunction with different filter algorithms in order to receive a progressive signal according to the present invention.

Fig. 2     shows which pixels are preferably used when performing a filtering algorithm using only spatial input values,

Fig. 3     shows which pixels are preferably used when performing a filtering algorithm using only temporal input values.

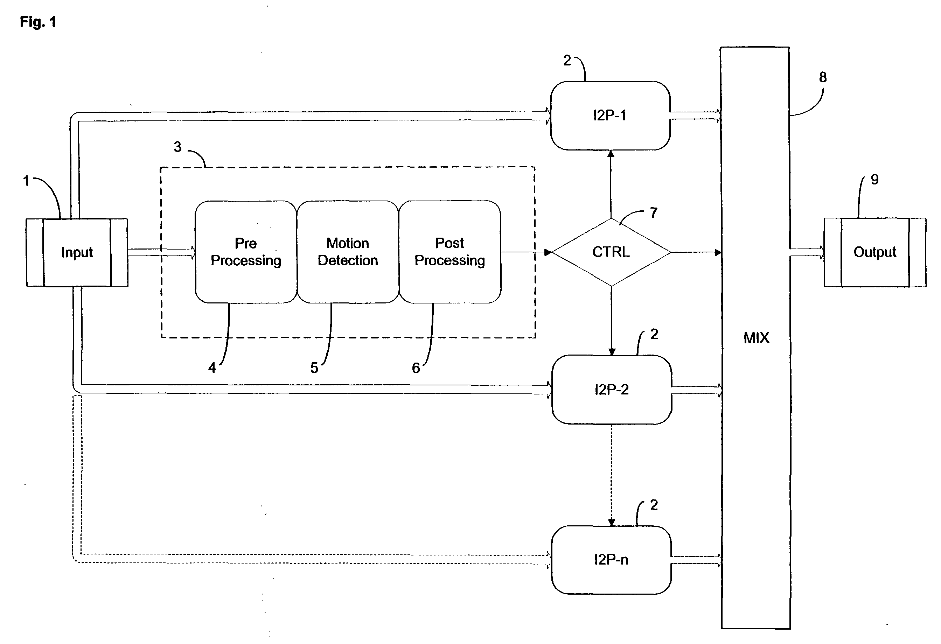

In the following description, making reference to Figure 1, a preferred embodiment of the of the present invention will be explained.

A data input means 1 supplies an input data preferably constituted by video signal source fields to different filter algorithms I2P-1 to I2P-n 2 and to a motion detection algorithm 3. The motion detection algorithm 3 comprises a preprocessing algorithm 4 for preprocessing the input data, the motion detection algorithm 5 itself, and a postprocessing algorithm 6. The postprocessing algorithm 6 postprocesses motion data detected by the motion detection algorithm 5 like smoothing the data. A controlling algorithm 7 compares a motion En calculated in motion detection algorithm 5 with at least one threshold value. According to this comparison, the controlling algorithm 7 controls the operation of a MIX algorithm 8. It may further control the filter algorithms 2. The MIX algorithm 8 processes the output of the different filter algorithms, and generates a resulting progressive signal as an output signal 9. The MIX algorithm 8 preferably selects only the result of one filter algorithm 2 according to the controlling procedure of the controlling algorithm 7. Further, the MIX algorithm 8 may mix different results of different filter algorithms 2 with each other. Instead of many different filter algorithms also the same algorithm with different filter coefficients and/or different input parameters and/or input values might be used.

In the following description, a first preferred embodiment of a filter algorithm is given.

In a first step, a motion En is detected by a motion detection process. Then, two different median filters are chosen in dependance of the following relations:

a) If $En < th_1$, then X = median(top, bottom, prev, next, 0.5 · (prev + next)),
b) if $En \geq th_1$, then X = median(top, bottom, prev, next, 0.5 · (top + bottom)).

In these two relations a) and b), X is a pixel value of a pixel to be determined, i.e. a pixel which belongs to a missing line of a video signal source field, and $th_1$ is a threshold value which is compared with the detected motion En.

If $th_1$ is larger than En, then the pixel value X is calculated from a median function in a) using five input values: top is a pixel value of a pixel which is located in the same temporal source field and immediately above the pixel corresponding to X; bottom is a pixel value of a pixel which is located in the same temporal source field and immediately below the pixel corresponding to X; prev is a pixel having the same spatial coordinates as those of the pixel corresponding to X, and which is located in a source field temporarily immediately preceding that which contains the pixel corresponding to X; next is a pixel having the same spatial coordinates as those of said pixel corresponding to X and is located in a video signal source field which temporarily immediately succeeds that which contains the pixel corresponding to X; 0.5 • (prev + next) is an interpolation of prev and next.

If the detected motion En is larger than or equal to $th_1$, then a second filter algorithm b) is used to calculate X which differs from the first filter algorithm only in terms of input values of the median filter, i.e in the ratio of temporal to spatial filtering in that the filter input value to the median filter is determined as 0.5 • (top + bottom) and therewith as an interpolation of top and bottom instead as an interpolation of previous and next.

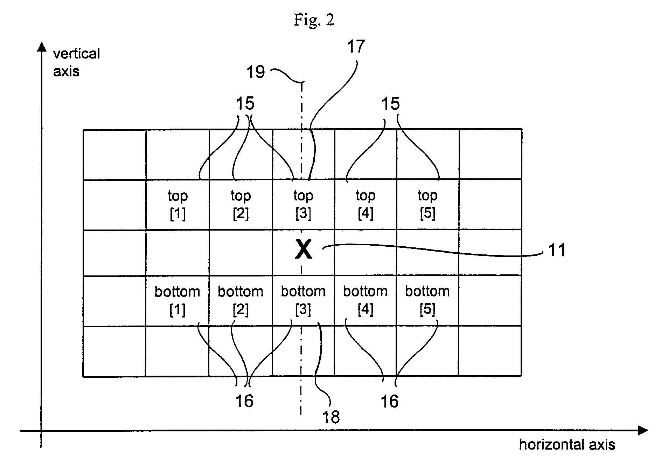

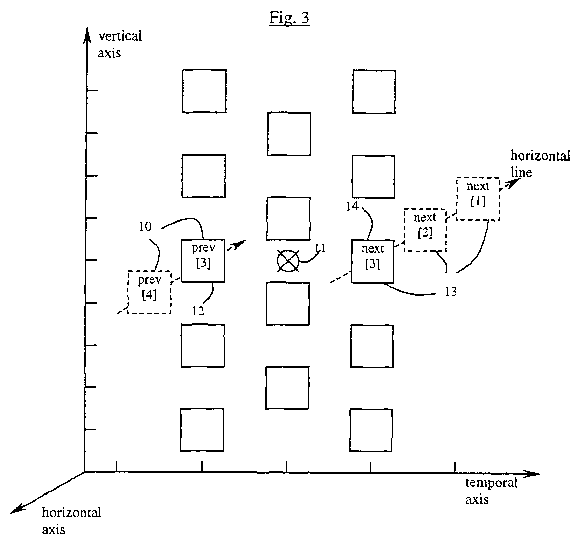

Now, making reference to figures 2 and 3, a second preferred embodiment of a filter algorithm will be described.

First, a motion En is detected by a motion detection process. Then, the motion En is compared with three threshold values $th_1$ to $th_3$. Accordingly, one of the following relations is used as filter algorithm for calculating X:

c) if $En < th_1$, then X = Median(top, bottom, prev, next, 0.5 · (prev+next)),

d) if $th_1 < En < th_2$, then X = Sel3(prev[1], next[1], prev[2], next[2], prev[3], next[3], prev[4], next[4], prev[5], next[5]),

e) if $th_2 < En < th_3$, then X = Median(top, bottom, prev, next, 0.5 · (top+ bottom)),

f) if $En > th_3$, then X = Sel3(top[1], bottom[1], top[2], bottom[2], top[3], bottom[3], top[4], bottom[4], top[5], bottom[5]).

The terms used in the relations are the same as those already described in the first embodiment. Further, $th_1$ to th3 are different threshold values which form an increasing numerical order. Additionally, in relation e) and f), a function Sel3 with ten input values is used. The function Sel3 is defined by

$$Sel3 (a[1], b[1], a[2], b[2], a[3], b[3], a[4], b[4], a[5], b[5]) =$$

$$Median(a[3], b[3], 0.5 · (a[2]+b[4])) \text{ if } D1 = min(D1, D2, D3)$$

$$Median(a[3], b[3], 0.5 · (a[3]+b[3])) \text{ if } D2 = min(D1, D2, D3)$$

$$Median(a[3], b[3], 0.5 · (a[4]+b[2])) \text{ if } D3 = min(D1, D2, D3),$$

with

$$D1 = |a[1]-b[3]| + |a[2]-b[4]| + |a[3]-b[5]|$$

$$D2 = |a[2]-b[2] | + |a[3]-b[3] | + |a[4]-b[4]|$$

$$D3 = |a[3]-b[1]| + |a[4]-b[2]| + |a[5]-b[3]|$$

In the following, the input values of the function Sel3 will be discussed. The values prev[1] to prev[5] 10 are pixel values being preferably located in the video signal source field temporarily preceding that which contains the pixel corresponding to X 11. All values prev[1] to prev[5] 10 are located in a single video signal source line and centered in prev[3] 12 which has the same spatial coordinates as those of the pixel corresponding to X 11. The values next[1] to next[5] 13 are pixel values being preferably located in the source field temporarly succeeding that which contains the pixel corresponding to X 11. All values next[1] to next[5] 13 are located in a single video signal source line and centered in next[3] 14 which has the same spatial coordinates as those of the pixel corresponding to X 11. The values top[1] to top[5] 15 are pixel values of pixel being located in the same temporal source field as that of the pixel corresponding to X 11, but being located in a single video signal source line above the pixel corresponding to X 11, and the values bottom[1] to bottom[5] 16 are pixel values of pixels being located in the same temporal source field as that of the pixel corresponding to X 11, but being located in a single video signal source line below the video signal source line containing the pixel corresponding to X 11, wherein the values top[1] to top[5] 15 and the values bottom[1] to bottom[5] 16 are centered in top[3] 17 and bottom[3] 18, respectively, top[3] 17 and bottom[3] 18 being connectable via a single column line 19 also connecting the pixel corresponding to X 11.

Preferably, the respective two pixel values (for example a[1] and b[1]) of each pair of the pixel values a[1], b[1], ... , a[5], b[5], defined by the same index, are connectable via a connecting line, respectively, said connecting line being parallel to a vertical source line axis, or a time axis of a three dimensional rectangular grid constituted by the vertical source line axis, the time axis and the horizontal source line axis, which are oriented perpendicular to each other. Each point in the grid, for example a[1], b[1], ... , a[5], b[5], represents a pixel value of a source field of a certain time.

Median(input values) is the median function which is known by those skilled in the art.
With the filter algorithms described above, a high quality of the resulting signal in the progressive mode can be achieved regardless of whether the source fields show high motion or low motion. Further, the filter algorithms are capable of compensating non-perfect motion detection processes.

**Claims**

1. Method of performing interlace to progressive conversion of video signal source fields on a pixel by pixel basis, **characterized by** selecting one of different filter algorithms according to a result of a motion detection process of said video signal source fields, wherein said different filter algorithms differ from each other in a ratio of spatial to temporal filtering.

2. Method according to claim 1, **characterized in that** said result of said motion detection process is condensed into a single scalar motion value En.

3. Method according to claim 1 or 2, **characterized in that** said different filter algorithms are carried out by using different rank order filters and/or by supplying different input values to at least one rank order filter.

4. Method according to claim 3, **characterized in that** said rank order filters use pixel values of said video signal source fields and/or interpolation values derived from said pixel values as imput values.

5. Method according to claim 3 or 4, **characterized by** using median filters or pseudo-median filters as rank order filters.

6. Method according to anyone of claims 2 to 5, **characterized by** comparing different motion threshold values calculatable from said video signal source fields and/or selectable by a user with said motion En to select one of said different filter algorithms.

7. Method according to anyone of the preceding claims, **characterized by** choosing said ratio of spatial to temporal filtering such that a share of spatial filtering is higher than a share of temporal filtering if said motion detection process yields a motion En higher than a first predetermined threshold value.

8. Method according to anyone of the preceding claims, **characterized by** choosing said ratio of spatial to temporal filtering such that a share of temporal filtering is higher than a share of spatial filtering if said motion detection process yields a motion En lower than a second predetermined threshold value.

9. Method according to anyone of claims 5 to 8, **characterized by** correlating said motion En detected by said motion detection process and said corresponding different median filters by the following relations:

   - if $En < th_1$, then X = Median(top, bottom, prev, next, $0.5 \cdot$ (prev+next)),
   - if $En \geq th_1$, then X = Median(top, bottom, prev, next, $0.5 \cdot$ (top+bottom)),

   wherein $th_1$ is a threshold value, X is a pixel value of a pixel to be interpolated, top is a pixel value of a pixel being located in the same temporal video signal source field and immediately above said pixel corresponding to X, bottom is a pixel value of a pixel being located in the same temporal video signal source field and immediately below said pixel corresponding to X, prev is a pixel having the same spatial coordinates as those of said pixel corresponding to X, and is located in a video signal source field temporarly preceeding that which contains said pixel corresponding to X, prev is a pixel having the same spatial coordinates as those of said pixel corresponding to X, and is located in a video signal source field temporarly succeeding that which contains said pixel corresponding to X.

10. Method according to anyone of the claims 5 to 8, **characterized by** correlating said En of said motion detection process and said corresponding different median filters by the following relations:

   - if $En < th_1$, then X = Median(top, bottom, prev, next, $0.5 \cdot$ (prev+next)),
   - if $th_1 < En < th_2$, then X = Sel3(prev[1], next[1], prev[2], next[2], prev[3], next[3], prev[4], next[4], prev[5], next[5]),
   - if $th_2 < En < th_3$, then X = Median(top, bottom, prev, next, $0.5 \cdot$ (top+ bottom)),

- if En > th$_3$, then X = Sel3(top[1], bottom[1], top[2], bottom[2], top[3], bottom[3], top[4], bottom[4], top[5], bottom[5]),

wherein th$_1$ to th$_3$ are different threshold values, which constitute a increasing numerical order, X (11) is a pixel value of a pixel to be interpolated, top is a pixel value of a pixel being located in the same temporal video signal source field and immediately above said pixel corresponding to X (11), bottom is a pixel value of a pixel being located in the same temporal video signal source field and immediately below said pixel corresponding to X (11), prev is a pixel having the same spatial coordinates as those of said pixel corresponding to X (11), and is located in a video signal source field temporaly preceeding that which contains said pixel corresponding to X (11), prev is a pixel having the same spatial coordinates as those of said pixel corresponding to X (11), and is located in a video signal source field temporarly succeeding that which contains said pixel corresponding to X (11), wherein

- "X = Sel3(a[1], b[1], a[2], b[2], a[3], b[3], a[4], b[4], a[5], b[5])" is a function defined by

$$Sel3\ (a[1], b[1], a[2], b[2], a[3], b[3], a[4], b[4], a[5], b[5]) =$$

$$Median(a[3], b[3], 0.5 \cdot (a[2]+b[4])\ \text{if}\ D1 = min(D1, D2, D3)$$

$$Median(a[3], b[3], 0.5 \cdot (a[3]+b[3])\ \text{if}\ D2 = min(D1, D2, D3)$$

$$Median(a[3], b[3], 0.5 \cdot (a[4]+b[2])\ \text{if}\ D3 = min(D1, D2, D3),$$

with

$$D1 = |a[1]-b[3]| + |a[2]-b[4]| + |a[3]-b[5]|$$

$$D2 = |a[2]-b[2]| + |a[3]-b[3]| + |a[4]-b[4]|$$

$$D3 = |a[3]-b[1]| + |a[4]-b[2]| + |a[5]-b[3]|$$

wherein prev[1] to prev[5] (10) are pixel values being located in a video signal source field temporally preceding that which contains said pixel corresponding to X (11), said pixel values prev[1] to prev[5] (10) being all located in a single video signal source line and centered in prev[3] (12), which has the same spatial coordinates as that of said pixel corresponding to X (11), and next[1] to next[5] (13) are pixel values being located in a video signal source field temporally succeeding that which contains said pixel corresponding to X (11), said pixel values next[1] to next[5] (13) being all located in a single video signal source line and centered in next[3] (14), which has the same spatial coordinates as that of said pixel corresponding to X (11), and top[1] to top[5] (15) are pixel values of pixel being located in the same temporal video signal source field as that of said pixel corresponding to X (11), but being located in a single video signal source line above said pixel corresponding to X (11), and bottom[1] to bottom[5] (16) are pixel values of pixels being located in the same temporal video signal source field as that of said pixel corresponding to X (11), but being located in a single video signal source line below said pixel corresponding to X (11), wherein top[1] to top[5] (15) and bottom[1] to bottom[5] (16) are centered in top[3] (17) and bottom[3] (18), respectively, top[3] (17) and bottom[3] (18) being connectable via a single column line (19) also connecting said pixel corresponding to X (11).

11. Method according to anyone of claims 2 to 10, **characterized by** calculating said motion En of said motion detection process on the basis of substracting pixel values of at least one pixel of a first video signal source field from pixel values of at least one pixel of a second video signal source field, said first video signal source field being temporarily different to said second video signal source field.

12. Method according to claim 11, **characterized in that** said substracting process is based upon substractions of pixel values of single pixels and/or block images and/or lines contained in said video signal source fields.

13. Method according to claim 10 or 11, **characterized in that** said first video signal source field immediately preceds that video signal source field containing said pixels to be interpolated, and said second video signal source field immediately succeeds that video signal source field containing the pixel to be interpolated.

14. Method according to anyone of claims 6 to 12, **characterized by** automatically varying a respective complexity of different filter algorithms according to a changing amount of computational power.

15. Method according to claim 10, **characterized in that** the respective two pixel values of each pair of said pixel values $a[1]$, $b[1]$, ... , $a[5]$, $b[5]$ defined by the same index are connectable via a connecting line, respectively, said connecting line being parallel to a vertical source line axis, or a time axis of a three dimensional rectangular grid constituted by said vertical source line axis, said time axis, and a horizontal source line axis, which are oriented perpendicular to each other.

**Fig. 1**

Fig. 2

Fig. 3

vertical
axis

horizontal
line

10

prev
[3]

11

14

next
[3]

next
[2]

next
[1]

prev
[4]

12

13

horizontal
axis

temporal
axis

**European Patent Office**

# EUROPEAN SEARCH REPORT

Application Number

EP 00 12 0657

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A | US 5 483 288 A (HONG SUNG H)<br>9 January 1996 (1996-01-09)<br>* abstract; figures 6,14B *<br>* column 1, line 29 - line 48 *<br>* column 2, line 27 - line 64 *<br>--- | 1-8,11,<br>12<br>9,10,15 | H04N5/44 |
| X<br>A | EP 0 372 774 A (SALORA OY)<br>13 June 1990 (1990-06-13)<br>* abstract *<br>* column 3, line 29 - column 4, line 17 *<br>--- | 1-8<br>9-11 | |
| X<br>A | US 5 493 338 A (HONG SUNG H)<br>20 February 1996 (1996-02-20)<br>* abstract; figures 4,5,7 *<br>* column 3, line 16 - line 45 *<br>* column 5, line 46 - column 6, line 45 *<br>--- | 1-6,<br>11-13<br>7-9 | |
| A | EP 0 946 055 A (SONY INT EUROP GMBH)<br>29 September 1999 (1999-09-29)<br>* abstract *<br>* column 6, line 21 - line 43 *<br>* column 7, line 49 - column 9, line 19 *<br>----- | 9,14 | TECHNICAL FIELDS SEARCHED (Int.Cl.7)<br><br>H04N |

The present search report has been drawn up for all claims

| Place of search | Date of completion of the search | Examiner |
|---|---|---|
| THE HAGUE | 8 February 2001 | Berwitz, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 00 12 0657

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2001

| Patent document cited in search report | | Publication date | Patent family member(s) | | Publication date |
|---|---|---|---|---|---|
| US 5483288 | A | 09-01-1996 | KR | 9506058 B | 07-06-1995 |
| EP 0372774 | A | 13-06-1990 | FI | 81232 B | 31-05-1990 |
| | | | AT | 139073 T | 15-06-1996 |
| | | | DE | 68926608 D | 11-07-1996 |
| | | | DE | 68926608 T | 24-10-1996 |
| US 5493338 | A | 20-02-1996 | KR | 9501563 B | 25-02-1995 |
| EP 0946055 | A | 29-09-1999 | CN | 1246765 A | 08-03-2000 |
| | | | JP | 2000056743 A | 25-02-2000 |

EPO FORM P0459

For more details about this annex : see Official Journal of the European Patent Office, No. 12/82